# EUROPEAN PATENT APPLICATION

(11) **EP 4 492 532 A1**
(43) Date of publication of application: **15.01.2025**
(21) Application number: 23184612.2
(22) Date of filing: 11.07.2023
(51) Int. Cl.: H01M 10/44, H01M 10/615, H01M 10/63, H01M 50/218, H01M 50/227, H01M 50/293

(54) **METHOD FOR CURING A POLYMER COMPOUND, METHOD FOR PRODUCING A BATTERY PACK, AND USE**

(71) Applicant: Volvo Car Corporation, 405 31 Göteborg (SE)
(72) Inventor: PERSSON, Klas, 40531 Göteborg (SE); WALLBORG, Martin Hjälm, 40531 Göteborg (SE)
(74) Representative: Maiwald GmbH

(57) **Abstract**

The disclosure relates to a method for curing a polymer compound (22) arranged adjacent to a battery cell (14). The method comprises generating heat by charging or discharging the battery cell (14). Moreover, the disclosure is directed to a method for producing a battery pack (10), wherein the battery pack (10) comprises at least one battery cell (14). The method comprises curing the polymer compound (22) using the method for curing a polymer compound (22). Additionally, the disclosure is directed to a use of a battery cell (14) for curing a polymer compound (22) arranged adjacent to the battery cell (14).

## Description

### TECHNICAL FIELD

The present disclosure relates to a method for curing a polymer compound arranged adjacent to a battery cell.

The present disclosure is also directed to a method for producing a battery pack, wherein the battery pack comprises at least one battery cell.

The present disclosure further relates to a use of a battery cell.

### BACKGROUND ART

In known battery packs, polymer compounds, such as adhesives or gap fillers, are used to mechanically connect adjacent battery cells of the battery pack or to mechanically connect a battery cell of the battery pack to a structural component of the battery pack.

During the production of such battery packs, the polymer compound is arranged in the relevant locations while in a liquid state or, more generally speaking, while having a viscosity low enough to allow the polymer compound to flow into comparatively narrow spaces. Subsequently, the polymer compound needs to undergo a curing stage or a solidification stage in order to gain the desired mechanical stability.

The curing or solidification can happen at room temperature. This has the disadvantage that curing or solidification requires a comparatively long time.

Alternatively, a polymer compound which cures or solidifies faster under higher temperatures may be used. In this case, the battery pack may be heated in order to speed up the curing or solidification. To this end, the battery pack may be arranged in a heated chamber. This has the disadvantages that the reduced curing time or solidification time is achieved at the expense of higher energy costs for the production of the battery pack.

### SUMMARY

It is therefore an objective of the present disclosure to improve the production of battery packs, especially the curing or solidification of polymer compounds used in battery packs, such that the above disadvantages are avoided or at least mitigated.

The problem is at least partially solved or alleviated by the subject matter of the independent claims of the present disclosure, wherein further examples are incorporated in the dependent claims.

According to a first aspect, there is provided a method for curing a polymer compound arranged adjacent to a battery cell. The method comprises generating heat by charging or discharging the battery cell. Every battery cell has an internal electrical resistance. When charging or discharging the battery cell, this internal electrical resistance has the effect that heat is generated. This heat is used for curing the polymer compound. It is understood that the polymer compound is a polymer compound that cures faster at higher temperatures. In contrast to known methods for curing polymer compounds arranged adjacent to a battery cell, in the method of the present disclosure, the heat is generated in the interior of the battery cells. This has the advantage that the heat may be transferred into the polymer compound with high efficiency and with little time lag. This is due to the fact that a thermal resistance between the battery cell and the polymer compound arranged adjacent to the battery cell is comparatively low, especially far lower than a thermal resistance of ambient air. Consequently, the polymer compound may be cured within a comparatively short time using a comparatively small amount of energy. In other words, using the present method, the polymer compound may be cured in a quick and efficient manner. Additionally, high quality of curing can be ensured since the heat generated by charging or discharging the battery cell is provided in a comparatively uniform, i.e. evenly distributed, manner.

Using the present method also has positive effects on a production flow in a production site where a polymer compound adjacent to a battery cell needs to be cured. Due to the reduced time for curing the polymer compound, waiting times within the production flow are reduced. As a consequence thereof, buffers may be reduced.

When executing the present method, the polymer compound may be an adhesive or a gap filler or a combined adhesive and gap filler.

In a case in which the present method is executed and a cooling system is associated with the battery cell, the cooling system may not be operated during curing of the polymer compound.

According to an example, charging or discharging the battery cell comprises alternately charging and discharging the battery cell. This means that the battery cell is charged several times and discharged several times. The charging and discharging is done in an alternating order. In other words, several charging-discharging cycles may be performed. As has been explained above, both charging and discharging of the battery cell generates heat due to the internal electrical resistance of the battery cell. Consequently, alternately charging and discharging the battery cell allows to generate a comparatively large amount of heat for curing the polymer compound. Moreover, the amount of heat generated may be precisely adjusted by adjusting the number of charging-discharging cycles. Thus, the polymer compound may be reliably cured.

In an example, the charging or discharging may be intermittent, i.e. interruptions may be provided between charging-discharging cycles or within charging-discharging cycles. This further allows to precisely adjust the heat generated.

In another example, the charging or discharging may be periodic. This means that the charging or discharging is performed according to a regular time pattern.

In an example, the battery cell forms part of a battery pack. In this example, charging the battery cell comprises charging the battery cell from an exterior of the battery pack. Additionally or alternatively, discharging the battery cell comprises discharging the battery cell to an exterior of the battery pack. Thus, the battery cell is charged and/or discharged for example from or to an electricity grid. In another example, the battery cell is charged and/or discharged for example from or to a battery external to the battery pack. This allows to reliably charge and/or discharge the battery cell of the battery pack.

In the present context, the battery pack is to be understood as an assembly comprising at least one structural component such as a housing and at least two battery cells attached to this structural component. Such a battery pack may also be called a battery module.

According to an example, the battery cell forms part of a battery pack comprising at least two battery cells being electrically coupled. In this example, charging the battery cell comprises charging the battery cell from another battery cell of the battery pack. Additionally or alternatively, discharging the battery cell comprises discharging the battery cell to another battery cell of the battery pack. In other words, an electric charge is transferred from one of the battery cells of the battery pack to another one of the battery cells of the battery pack. This may of course be done alternatingly. Thus, the electric charge may be cycled forth and back between battery cells of the battery pack. Thus, in this example, an external supply of electricity is not needed. This means that the heat for curing the polymer compound may be generated by the battery cells of the battery pack alone.

It is noted that for the above example, i.e. the example in which charging the battery cell comprises charging the battery cell from another battery cell of the battery pack, each battery cell needs a cell-level switching means. Using the cell-level switching means, one of the battery cells may be discharged to another battery cell of the battery pack. Thus, from the perspective of the other battery cell, a battery cell may be charged from another battery cell of the battery pack. The cell-level switching means may comprise a DC-DC converter.

In another example, the battery cell forms part of a battery pack comprising a capacitor being electrically coupled to the battery cell. In this example, charging the battery cell comprises charging the battery cell from the capacitor. Additionally or alternatively, discharging the battery cell comprises discharging the battery cell to the capacitor. It is also possible to alternately discharge the battery cell to the capacitor and charge the battery cell from the capacitor. This means that an electric charge is transferred from the battery cell to the capacitor and/or from the capacitor to the battery cell. This may be done in several cycles. Thus, also in this example, an external supply of electricity is not needed. This means that the heat for curing the polymer compound may be generated by components of the battery pack alone.

In an example, the battery cell is charged or discharged for 1 to 15 minutes. The battery cell may be charged or discharged for 3 to 6 minutes, for example for 5 minutes. It is noted that a charging time and/or discharging time suitable for generating the heat necessary for curing the polymer compound depends on several factors such as the cell chemistry and the design of the battery cell which influences the internal electrical resistance. An additional influencing factor is the design of the battery pack and the material properties of the polymer compound. A further influencing factor is the degree of curing that is to be achieved. It has been found that charging or discharging the battery cell for 1 to 15 minutes allows to reliably cure the polymer compound for common designs of battery cells and battery packs.

In an example, the battery cell is charged using a charging current of 100 A to 1000 A. Alternatively, the battery cell is discharged using a discharging current of 100 A to 1000 A. The charging current may for example be a 500 A. The discharging current may for example be 500 A. It is noted that the charging current and/or the discharging current may depend on several factors such as the cell chemistry and the design of the battery cell which influences the internal electrical resistance. An additional influencing factor is the design of the battery pack and the material properties of the polymer compound. A further influencing factor is the degree of curing that is to be achieved. It has been found that the above ranges of charging current and/or discharging current allow to reliably cure the polymer compound for common designs of battery cells and battery packs.

In an example, the battery cell is charged to a capacity level of 60% or less. According to another example, the battery cell is charged to a capacity level of 50% or less. According to another example, the battery cell is charged to a capacity level of 40% or less. In these ranges of capacity level, a good compromise between the generation of sufficient heat for curing the polymer compound and undesired aging processes of the battery cell may be achieved.

In an example, the battery cell is discharged to a capacity level of 20% or more. According to another example, the battery cell is discharged to a capacity level of 30% or more. In these ranges of capacity level, a good compromise between the generation of sufficient heat for curing the polymer compound and undesired aging processes of the battery cell may be achieved.

According to a second aspect, there is provided a method for producing a battery pack. The battery pack comprises at least one battery cell. The method comprises:
- providing the at least one battery cell,
- providing a non-cured or partially cured polymer compound adjacent to the at least one battery cell, and
- curing the polymer compound using the method of any one of the preceding claims.

As has been mentioned before, every battery cell has an internal electrical resistance. When charging or discharging the battery cell, this internal electrical resistance has the effect that heat is generated. This heat is used for curing the polymer compound. It is understood that the polymer compound is a polymer compound that cures faster at higher temperatures. In contrast to known methods for curing polymer compounds arranged adjacent to a battery cell, in the present method, the heat is generated in the interior of the battery cell. This has the effect that the heat may be transferred into the polymer compound with high efficiency and with little time lag. This is due to the fact that a thermal resistance between the battery cell and the polymer compound arranged adjacent to the battery cell is comparatively low, especially far lower than a thermal resistance of ambient air. Consequently, the polymer compound may be cured within a comparatively short time using a comparatively small amount of energy. In other words, using the present method, the polymer compound may be cured in a quick and efficient manner. Additionally, high quality of curing can be ensured since the heat generated by charging or discharging the battery is provided in a comparatively uniform, i.e. evenly distributed, manner. Altogether, a battery pack of high quality may be produced in an efficient manner. Furthermore, the time for producing the battery pack is comparatively low.

Also when executing the method for producing a battery pack, the polymer compound may be an adhesive or a gap filler or a combined adhesive and gap filler.

In an example, the battery pack comprises at least one structural component. In this example, providing the non-cured or partially cured polymer compound adjacent to the at least one battery cell comprises providing the non-cured or partially cured polymer compound at an interface between the battery cell and the structural component. Thus, by curing the polymer compound, a mechanically stable connection between the battery pack and the structural component is achieved. The structural component is for example a part of a housing of the battery pack.

In an example, the battery pack comprises at least two battery cells. In this example, providing the non-cured or partially cured polymer compound adjacent to the at least one battery cell comprises providing the non-cured or partially cured polymer compound at an interface between the at least two battery cells. Thus, by curing the polymer compound, a mechanically stable connection between the battery cells is achieved.

According to a third aspect, there is provided a use of a battery cell for curing a polymer compound arranged adjacent to the battery cell. When curing the polymer compound arranged adjacent to the battery cell, the battery cell is present anyways. Thus, using the battery cell for curing the polymer compound enhances efficiency in several respects. First, using the battery cell for curing the polymer compound may render other equipment for curing the polymer compound unnecessary. Alternatively, using the battery cell for curing the polymer compound may allow other equipment for curing the polymer compound to be reduced in size or performance. Second, as has been mentioned before, every battery cell has an internal electrical resistance. When charging or discharging the battery cell, this internal electrical resistance has the effect that heat is generated. This heat may be used for curing the polymer compound. It is understood that the polymer compound is a polymer compound that cures faster at higher temperatures. This heat is generated in the interior of the battery cell. This has the effect that the heat may be transferred into the polymer compound with high efficiency and with little time lag. This is due to the fact that a thermal resistance between the battery cell and the polymer compound arranged adjacent to the battery cell is comparatively low, especially far lower than a thermal resistance of ambient air. Consequently, the polymer compound may be cured within a comparatively short time using a comparatively small amount of energy. In other words, using the battery cell, the polymer compound may be cured in a quick and efficient manner. Additionally, high quality of curing can be ensured since the heat generated by charging or discharging the battery is provided in a comparatively uniform, i.e. evenly distributed, manner. Altogether, a battery pack of high quality may be produced in an efficient manner. Furthermore, the time for producing the battery pack is comparatively low.

In an example of the use, the battery cell generates heat by charging or discharging the battery cell. As has been explained before, this allows to ensure curing of high quality. At the same time, curing may be done within a comparatively short time and with high efficiency.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a battery pack comprising several battery cells in a top view, wherein a cover part of the battery pack is not shown and wherein the battery pack is produced according to a method according to the present disclosure for producing a battery pack, and
- Figure 2: shows a portion of the battery pack of Figure 1 in a view along direction II in Figure 1.

### DETAILED DESCRIPTION

The Figures are merely schematic representations and serve only to illustrate examples of the disclosure. Identical or equivalent elements are in principle provided with the same reference signs.

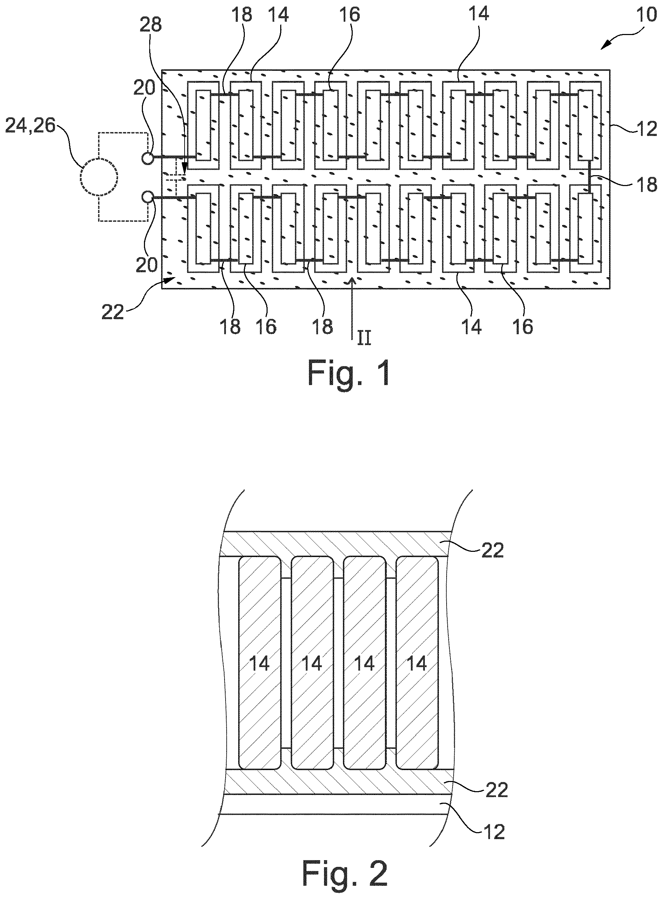

Figure 1 shows a battery pack 10 comprising a housing 12 and a plurality of battery cells 14 arranged in the housing 12.

A cell-level switching means 16 is associated with each of the battery cells 14. More precisely, a cell-level switching means 16 is arranged on a top side of each of the battery cells 14. Each of the cell-level switching means 16 is electrically connected to the terminals of the associated battery cell 14.

Moreover, the battery cells 14 are electrically connected to one another via bus bars 18.

For reasons of better visibility, only some of the battery cells 14, only some of the cell-level switching means 16 and only some of the bus bars 18 are provided with a reference sign in Figure 1.

Additionally, the battery pack 10 comprises two terminals 20 via which the battery pack 10 may be electrically contacted.

The battery pack 10 additionally comprises two layers of a polymer compound 22 (see also Figure 2).

In the present example, the polymer compound 22 is an adhesive which connects neighboring battery cells 14 to one another and which additionally connects the battery cells 14 of the battery pack 10 to the housing 12 of the battery pack 10.

In this context, the housing 12 may be referred to as a structural component of the battery pack 10. Therefore, references sign 12 is also used for the structural component.

The battery pack 10 may be produced according to a method for producing the battery pack 10 according to a first example.

In a first step S1 of the method, the battery cells 14 are provided. More precisely, the battery cells 14 are arranged in the housing 12.

Thereafter, in a second step S2, the polymer compound 22 is provided in a non-cured state. This implies that the polymer compound 22 is provided in a liquid state. The polymer compound 22 is provided adjacent to the battery cells 14. This means that the polymer compound 22 is filled into the gaps between the battery cells 14. In other words, the polymer compound 22 is provided at the interfaces between adjacent battery cells 14.

Furthermore, the polymer compound 22 is filled into the gaps between the battery cells 14 and the housing 12. In other words, the polymer compound 22 is provided at the interfaces between the battery cells 14 and the housing 12, i.e. the structural component of the battery pack 10.

Subsequently, in a third step S3, the polymer compound 22 is cured. In doing so, the polymer compound 22 solidifies and provides a reliable mechanical connection between adjacent battery cells 14 and between the battery cells 14 and the housing 12.

For the performance of the third step S3, the battery cells 14 and the cell-level switching means 16 are used.

Virtual pairs of adjacent battery cells 14 are formed and a first one of the battery cells 14 forming the pair is electrically discharged to a second one of the battery cells 14 forming the pair. In other words, the second one of the battery cells 14 is charged by the first one of the battery cells 14 forming the pair. This is done in an alternating manner. This means that an electric charge is repeatedly cycled from the first one of the battery cells 14 forming the pair to the second one of the battery cells 14 forming the pair and vice versa.

In the present example, the battery cells 14 forming the pair are charged to a capacity level of 60% or less and are discharged to a capacity level of 20% or more.

In other words, the charge of the battery cells 14 is cycled within the interval of 20% of the capacity level and 60% of the capacity level.

Moreover, in the present example, the battery cells 14 are charged and discharged for approximately 5 minutes respectively.

A charging current and a discharging current amount to approximately 500 A.

Charging and discharging the battery cells generates heat due to the fact that the battery cells 14 have an internal electrical resistance.

This heat is used for curing the polymer compound 22.

The method for producing the battery pack 10 may also be executed in accordance with a second example. In this example, the third step S3 differs from the third step S3 of the method according to the first example. In the second example, the battery cells 14 are charged from an exterior of the battery pack, i.e. from and external power source 24 and are discharged to an exterior of the battery pack 10, i.e. to an external power sink 26.

The external power source and the external power sink 26 may be formed by an electric grid.

Also in this example, the battery cells 14 are alternatingly charged and discharged. This means that an electric charge is repeatedly transferred between the cells 14 of the battery pack 10 and the external power source 24 or the external power sink 26 respectively.

The method for producing the battery pack 10 may also be executed in accordance with a third example. In this example, the third step S3 differs from the third step S3 of the method according to the first example and the second example. In the third example, the battery pack 10 comprises a capacitor 28 electrically connected to the terminals 20 and, thus, also to the battery cells 14.

In this example, the battery cells are discharged to the capacitor 28 and are charged from the capacitor 28.

Also in this example, the battery cells 14 are alternatingly charged and discharged. This means that an electric charge is repeatedly cycled between the cells 14 of the battery pack and the capacitor 28.

It is noted that for the second example and for the third example, only the differences with respect to the first example have been explained. Otherwise, the explanations provided in connection with the first example apply mutatis mutandis.

Moreover, it is noted that all three examples are represented in Figure 1. For this reason, the components relating to the second example only, i.e. the external power source 24 and the external power sink 26 are represented in dotted lines. Also the components relating to the third example only, i.e. the capacitor 28, are represented in dotted lines.

Thus, in all examples, the polymer compound 22 is cured in that heat is generated by charging or discharging the battery cells 14. In other words, the battery cells 14 are used for curing the polymer compound 22 arranged adjacent to the battery cell.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: battery pack
- 12: housing
- 14: battery cell
- 16: cell-level switching means
- 18: bus bar
- 20: terminal
- 22: polymer compound
- 24: external power source
- 26: external power sink
- 28: capacitor

- S1: first step
- S2: second step
- S3: third step

## Claims

1. A method for curing a polymer compound (22) arranged adjacent to a battery cell (14), the method comprising: generating heat by charging or discharging the battery cell (14).

2. The method of claim 1, wherein charging or discharging the battery cell (14) comprises alternately charging and discharging the battery cell (14).

3. The method of claim 1 or 2, wherein the battery cell (14) forms part of a battery pack (10) and
wherein charging the battery cell (14) comprises charging the battery cell (14) from an exterior of the battery pack (10) and/or
wherein discharging the battery cell (14) comprises discharging the battery cell (14) to an exterior of the battery pack (10).

4. The method of any one of the preceding claims, wherein the battery cell (14) forms part of a battery pack (10) comprising at least two battery cells (14) being electrically coupled and
wherein charging the battery cell (14) comprises charging the battery cell (14) from another battery cell (14) of the battery pack (10) and/or
wherein discharging the battery cell (14) comprises discharging the battery cell (14) to another battery cell (14) of the battery pack (10).

5. The method of any one of the preceding claims, wherein the battery cell (14) forms part of a battery pack (10) comprising a capacitor (28) being electrically coupled to the battery cell (14) and
wherein charging the battery cell (14) comprises charging the battery cell (14) from the capacitor (28) and/or
wherein discharging the battery cell (14) comprises discharging the battery cell (14) to the capacitor (28).

6. The method of any of the preceding claims, wherein the battery cell (14) is charged or discharged for 1 to 15 minutes.

7. The method of any of the preceding claims, wherein the battery cell (14) is charged using a charging current of 100 A to 1000 A or wherein the battery cell (14) is discharged using a discharging current of 100 A to 1000 A.

8. The method of any of the preceding claims, wherein the battery cell (14) is charged to a capacity level of 60% or less.

9. The method of any of the preceding claims, wherein the battery cell (14) is discharged to a capacity level of 20% or more.

10. A method for producing a battery pack (10), wherein the battery pack (10) comprises at least one battery cell (14), the method comprising:
- providing the at least one battery cell (14) (S1),
- providing a non-cured or partially cured polymer compound (22) adjacent to the at least one battery cell (14) (S2), and
- curing the polymer compound (22) using the method of any one of the preceding claims (S3).

11. The method of claim 10, wherein the battery pack (10) comprises at least one structural component (12) and wherein providing the non-cured or partially cured polymer compound (22) adjacent to the at least one battery cell (14) comprises providing the non-cured or partially cured polymer compound (22) at an interface between the battery cell (14) and the structural component (12).

12. The method of claim 10 or 11, wherein the battery pack (10) comprises at least two battery cells (14) and wherein providing the non-cured or partially cured polymer compound (22) adjacent to the at least one battery cell (14) comprises providing the non-cured or partially cured polymer compound (22) at an interface between the at least two battery cells (14).

13. A use of a battery cell (14) for curing a polymer compound (22) arranged adjacent to the battery cell (14).

14. The use of claim 13, wherein the battery cell (14) generates heat by charging or discharging the battery cell (14).
